Europäisches Patentamt

European Patent Office

Office européen des brevets

(11) Numéro de publication: **0 149 366**
**A1**

## (12) DEMANDE DE BREVET EUROPEEN

(21) Numéro de dépôt: 84400093.5

(22) Date de dépôt: 17.01.84

(51) Int. Cl.⁴: **F 04 B 39/02**
F 25 B 3/00, F 16 N 1/00

(43) Date de publication de la demande:
24.07.85 Bulletin 85/30

(84) Etats contractants désignés:
BE CH DE FR GB IT LI

(71) Demandeur: L'UNITE HERMETIQUE S.A.
Route de Lyon
F-38290 La Verpilliere(FR)

(72) Inventeur: Bergeron, Emile
THOMSON-CSF SCPI 173, bld Haussmann
F-75379 Paris Cedex 08(FR)

(72) Inventeur: Champier, Bernard
THOMSON-CSF SCPI 173, bld Haussmann
F-75379 Paris Cedex 08(FR)

(72) Inventeur: Anchisi, Robert
THOMSON-CSF SCPI 173, bld Haussmann
F-75379 Paris Cedex 08(FR)

(72) Inventeur: Dubost, Alain
THOMSON-CSF SCPI 173, bld Haussmann
F-75379 Paris Cedex 08(FR)

(74) Mandataire: Grynwald, Albert et al,
THOMSON-CSF SCPI 173, Bld Haussmann
F-75379 Paris Cedex 08(FR)

(54) Dispositif d'équilibrage du niveau d'huile de compresseurs mis en parallèle dans un circuit frigorifique, et installation frigorifique à compresseurs en parallèle munie de ce dispositif.

(57) Dispositif d'équilibrage du niveau d'huile de compresseurs mis en parallèle dans un circuit de réfrigération, permettant d'éviter le transfert de l'huile de ruissellement le long des parois des enceintes hermétiques des compresseurs a l'arrêt vers un compresseur en fonctionnement.

Ce dispositif comprend une tubulure (30) d'égalisation de niveau d'huile sur lequel sont branchées en parallèle les enceintes ($E_1$,$E_2$,$E_3$) des compresseurs ($C_1$,$C_2$,$C_3$), grâce à des portions (31,32,33) de la tubulure (30) faisant saillie horizontalement à l'intérieu des enceintes ($E_1$,$E_2$,$E_3$...) à travers une paroi verticale, lesdites portions étant situées à un niveau supérieur ou égal à toutes les autres parties de la tubulure.

Application aux installations frigorifiques à compresseurs en parallèle.

FIG_4

EP 0 149 366 A1

# DISPOSITIF D'EQUILIBRAGE DU NIVEAU D'HUILE DE COMPRESSEURS MIS EN PARALLELE DANS UN CIRCUIT FRIGORIFIQUE, ET INSTALLATION FRIGORIFIQUE A COMPRESSEURS EN PARALLELE MUNIE DE CE DISPOSITIF.

Certaines installations frigorifiques importantes, en particulier celles des magasins de grande surface qui doivent assurer une réfrigération en différents endroits du magasin avec des charges frigorifiques variables, sont équipées d'une centrale de réfrigération comportant plusieurs compresseurs hermétiques montés en parallèle sur le circuit frigorifique. Ce type de montage permet un réglage souple des puissances frigorifiques délivrées en fonction de la demande, en mettant en fonctionnement un, ou plusieurs compresseurs simultanément.

Dans ce type d'installation, il est nécessaire de pouvoir conserver, pour chacun de ces compresseurs, un niveau d'huile le plus constant possible, de façon à assurer une lubrification convenable des éléments mécaniques des compresseurs. Pour cela, il est connu d'utiliser un tube d'égalisation de niveau d'huile sur lequel les enceintes des compresseurs sont branchées en parallèle, ce tube d'égalisation débouchant dans la partie inférieure de chacune des enceintes, à la hauteur du niveau d'huile minimum acceptable dans l'enceinte du compresseur.

Cependant, dans ces installations munies de tubes d'égalisation d'huile, on a pu constater des déplacements d'huile d'un compresseur à l'autre, ces déplacements ayant lieu du ou des compresseurs à l'arrêt vers le ou les compresseurs qui sont en fonctionnement. Ce phénomène semble dû, d'une part, au fait que le compresseur en fonctionnement récupère l'huile mélangée au gaz réfrigérant (connu sous la marque déposée Fréon) retournant vers ce compresseur par la tubulure d'aspiration et, d'autre part, à la dépression créée dans l'enceinte du compresseur à l'arrêt.

On a alors constaté que, dans les installations de type connu, le niveau d'huile pouvait descendre au-dessous du niveau acceptable dans les enceintes des compresseurs à l'arrêt, c'est-à-dire à un niveau situé au-dessous de l'orifice d'insertion du tube d'égalisation de niveau sur l'enceinte hermétique, cela étant dû vraisemblablement au ruissellement de l'huile le long de la paroi de l'enceinte, ce ruissellement étant aspiré par le compresseur voisin en fonctionnement.

Un dispositif connu pour l'équilibrage du niveau d'huile entre plusieurs enceintes de compresseurs est décrit dans le Brevet US - A - 3 581 519. Il est constitué d'une tubulure qui réalise la mise en parallèle des différentes enceintes. La liaison entre un tube et une enceinte s'effectue sur une paroi verticale. L'extrémité d'un tube pénétrant dans une enceinte fait saillie à l'intérieur de ladite enceinte d'une manière inclinée, de sorte que l'ouverture du tube soit à un niveau inférieur à son niveau de pénétration dans ladite enceinte. Le niveau minimum de l'huile dans l'enceinte d'un compresseur ne peut pas devenir inférieur au niveau de l'ouverture du tube correspondant.

Mais, il existe dans l'ensemble de la tubulure des points de niveau supérieur au niveau des ouvertures des tubes dans les enceintes, ce qui entraîne qu'un tel dispositif fonctionne à la manière d'un siphon et présente des inconvénients : il peut arriver que l'enceinte d'un compresseur ait une demande en huile supérieure à une autre. Dans ce cas, il va se produire un phénomène d'aspiration à l'intérieur de l'ensemble de la tubulure, ayant pour effet de vider cette tubulure au profit de l'enceinte considérée. Il y a alors désamorçage de l'ensemble et pour réamorcer il est nécessaire d'établir une surpression ou bien encore de réinjecter de l'huile à l'intérieur du circuit afin de vaincre la différence de niveau entre l'ouverture des tubes et les points de la tubulure situés à un niveau supérieur.

La présente invention ne présente pas les inconvénients des différents dispositifs d'égalisation.

Suivant l'invention un dispositif d'équilibrage du niveau de l'huile de plusieurs enceintes de compresseurs dans un circuit de réfrigération, comporte une tubulure sur laquelle sont branchées en parallèle les enceintes hermétiques des compresseurs, le branchement s'effectuant sur les parois verticales de chaque enceinte grâce à des portions de tubulure faisant saillie à l'intérieur de chaque enceinte, et est caractérisé en ce que lesdites portions de tubulure font saillie horizontalement à l'intérieur de chaque enceinte, et en ce que toutes les autres parties de la tubulure sont à un niveau inférieur ou égal au niveau de ces portions horizontales.

Ainsi, l'ensemble d'égalisation fonctionne selon le principe des vases communicants et il ne peut donc pas se produire de phénomène de désamorçage de l'ensemble du circuit d'égalisation puisque l'ouverture des portions de tubulure à l'intérieur des enceintes est au niveau maximum du circuit : il y aura toujours de l'huile dans la tubulure. En outre, les problèmes liés au phénomène de ruissellement sont supprimés par le fait que les portions de tubulure font saillie à l'intérieur des enceintes.

L'invention sera mieux comprise et d'autres caractéristiques apparaîtront à l'aide de la description ci-après et des dessins qui l'accompagnent et sur lesquels :

La figure 1 représente schématiquement des compresseurs branchés en parallèle dans une installation frigorifique de type connu.

Les figures 2 et 3 montrent les niveaux d'huile obtenus dans des enceintes hermétiques de compresseurs mis en parallèle, respectivement pour un compresseur en fonctionnement et un compresseur à l'arrêt.

La figure 4 montre une installation frigorifique comportant des compresseurs mis en parallèle et munis d'un dispositif d'équilibrage de niveau d'huile suivant l'invention.

La figure 5 montre un détail d'un compresseur de la figure 4.

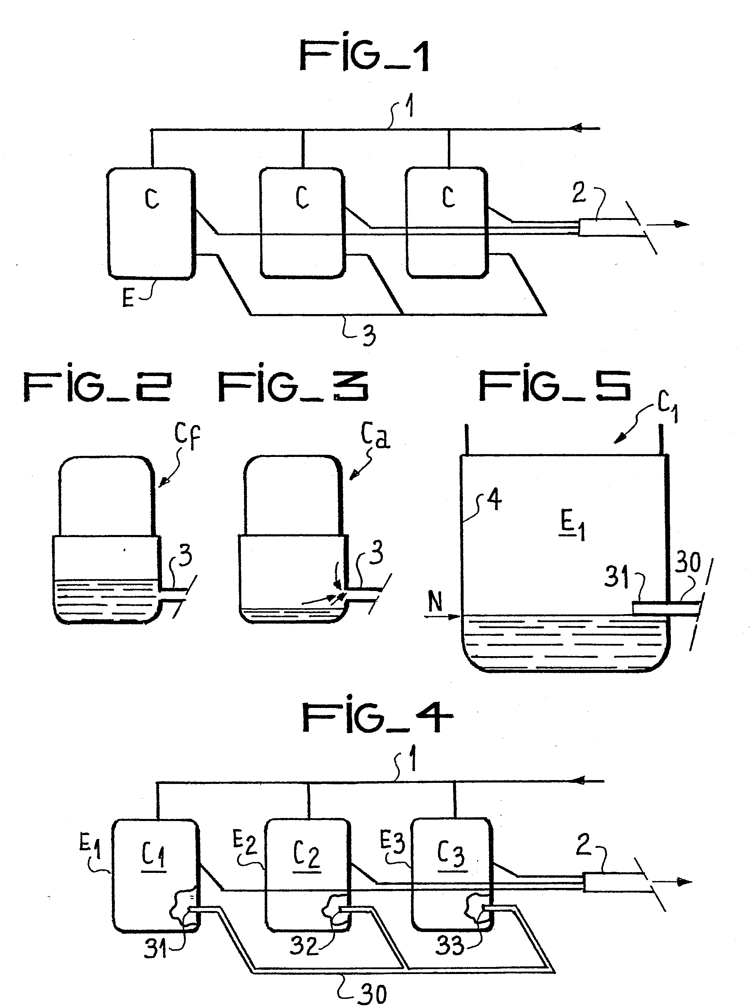

Dans certaines installations frigorifiques de type connu, des compresseurs C de réfrigération sont disposés, comme le montre schématiquement la figure 1, en parallèle sur une tubulure principale d'aspiration 1 et une tubulure principale de refoulement 2 du gaz réfrigérant circulant dans un circuit de réfrigération. Cette installation comporte de plus, de façon connue, une tubulure 3 d'égalisation du niveau d'huile contenue dans les enceintes hermétiques des compresseurs C.

Comme il a été dit précédemment, ce niveau d'huile ne doit pas être inférieur à un niveau déterminé afin qu'une lubrification convenable des éléments mécaniques des compresseurs soit assurée. Cependant, lorsque, dans l'installation frigorifique, certains compresseurs sont en fonctionnement alors que d'autres compresseurs sont à l'arrêt, le niveau d'huile dans les enceintes des compresseurs $C_a$ à l'arrêt peut descendre au-dessous du niveau minimum, comme le montre la figure 3, au profit des enceintes de compresseurs $C_f$ en fonctionnement (figure 2) aspirant une partie de l'huile contenue dans les enceintes des compresseurs $C_a$ à l'arrêt.

La figure 4 représente l'application du dispositif d'équilibrage du niveau d'huile selon l'invention à une installation frigorifique comportant trois enceintes $E_1$, $E_2$, $E_3$ contenant chacune respectivement un compresseur $C_1$, $C_2$, $C_3$.

Les compresseurs $C_1$, $C_2$, $C_3$ sont branchés en parallèle sur une tubulure principale d'aspiration 1 et sur une tubulure principale de refoulement 2 du gaz réfrigérant circulant dans le circuit de réfrigération.

Le dispositif d'équilibrage du niveau d'huile suivant l'invention, associé à des compresseurs $C_1$,$C_2$,$C_3$ mis en parallèle sur le circuit de réfrigération, comme montré en figure 4, comprend une tubulure 30 d'égalisation de niveau d'huile raccordée de façon étanche et en parallèle aux enceintes $E_1$, $E_2$, $E_3$ contenant les compresseurs $C_1$, $C_2$, $C_3$, grâce à des portions 31, 32, 33 de tubulure faisant saillie à travers les parois verticales des enceintes.

Suivant l'invention, les portions 31, 32, 33 du tube 30 d'égalisation raccordées à chacune des enceintes $E_1$,$E_2$,$E_3$ font saillie horizontalement à l'intérieur de ces enceintes $E_1$,$E_2$,$E_3$. De plus,

5

l'ensemble du dispositif d'égalisation de niveau est agencé pour qu'aucune autre partie de la tubulure ne soit à un niveau supérieur aux portions 31, 32, 33 pénétrant à l'intérieur des enceintes $E_1$, $E_2$, $E_3$.

Ainsi, le dispositif d'égalisation de l'invention fonctionne sur le principe des vases communicants et l'ensemble de la tubulure 30 ne peut pas se vider de son huile. L'huile de ruissellement descendant le long de la paroi 4 verticale intérieure de ces enceintes $E_1$,$E_2$,$E_3$ ou de la paroi d'éléments placés dans ces dernières, ne peut plus être aspirée par la tubulure 30 vers une enceinte voisine de compresseur en fonctionnement, puisque les portions de tubulure sont en saillie à l'intérieur de l'enceinte, et le niveau de l'huile ne peut descendre au-dessous d'un niveau N choisi, correspondant au niveau inférieur desdites portions de la tubulure 30 d'égalisation, comme le montre de façon plus détaillée la figure 5.

## REVENDICATIONS

1. Dispositif d'équilibrage du niveau d'huile de plusieurs enceintes ($E_1$, $E_2$, $E_3$ ...) de compresseurs ($C_1$, $C_2$, $C_3$ ...) branchés en parallèle dans un circuit de réfrigération, comprenant une tubulure (30) d'égalisation de niveau d'huile raccordée de façon étanche et en parallèle sur les parois verticales (4) des enceintes ($E_1$,$E_2$,$E_3$ ...) des compresseurs ($C_1$,$C_2$,$C_3$...) grâce à des portions (31, 32, 33 ...) de tubulure faisant saillie à travers lesdites parois, caractérisée en ce que chacune des portions (31, 32, 33 ...) de la tubulure (30) fait saillie horizontalement à l'intérieur de chaque enceinte et en ce que toutes les autres parties de la tubulure (30) sont situées à un niveau inférieur ou égal au niveau desdites portions (31, 32, 33 ...) horizontales.

2. Installation frigorifique comprenant plusieurs compresseurs ($C_1$,$C_2$,$C_3$ ...) branchés en parallèle dans un circuit de réfrigération, caractérisée en ce qu'elle comporte un dispositif d'équilibrage du niveau d'huile suivant la revendication 1.

FIG_1

FIG_2  FIG_3  FIG_5

FIG_4

# RAPPORT DE RECHERCHE EUROPEENNE

Office européen
des brevets

EP 84 40 0093

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| Y | US-A-3 140 041 (KRAMER) <br> * colonne 5, ligne 11 - colonne 8, ligne 9; figures 1-5 * | 1,2 | F 04 B 39/02 <br> F 25 B 31/00 <br> F 16 N 19/00 |
| | --- | | |
| Y | US-A-2 253 623 (JORDAN) <br> * page 2, colonne de gauche, lignes 11-31; colonne de droite, lignes 2-52; figure * | 1,2 | |
| | --- | | |
| D,A | US-A-3 581 519 (GARRETT) <br> * colonne 2, ligne 35 - colonne 3, ligne 27; figures 1-6 * | 1,2 | |
| | --- | | |
| A | US-A-2 076 332 (ZERCHER) <br> * page 2, colonne de droite, ligne 16 - page 3, colonne de gauche, ligne 27; figure 3 * | 1,2 | |
| | --- | | **DOMAINES TECHNIQUES RECHERCHES (Int. Cl. 3)** |
| A | US-A-2 140 415 (BUEHLER) <br> * page 1, colonne de droite, ligne 24 - page 2, colonne de droite, ligne 55; figure 1 * | 1,2 | F 04 B <br> F 25 B <br> F 16 N |
| | --- | | |
| E | FR-A-2 530 792 (L'UNITE HERMETIQUE) <br> * page 2, ligne 33 - page 3, ligne 32; figure 4 * | 1,2 | |
| | --- | | |
| A | US-A-3 386 262 (HACKBART) | | |
| | ---    -/- | | |

Le présent rapport de recherche a été établi pour toutes les revendications

| Lieu de la recherche | Date d'achèvement de la recherche | Examinateur |
|---|---|---|
| LA HAYE | 14-09-1984 | BOETS A.F.J. |

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | US-A-2 645 102 (DILLS) | | |
| A | FR-A-2 137 681 (VEB KOMBINAT LUFT- UND KÄLTETECHNIK) | | |
| A | FR-A- 389 451 (GRIMM) | | |
| A | FR-A-2 388 226 (WESTINGHOUSE) | | |
| | ----- | | |
| | | | **DOMAINES TECHNIQUES RECHERCHES (Int. Cl. ³)** |

Le présent rapport de recherche a été établi pour toutes les revendications

| Lieu de la recherche | Date d'achèvement de la recherche | Examinateur |
|---|---|---|
| LA HAYE | 14-09-1984 | BOETS A.F.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82